# EUROPEAN PATENT SPECIFICATION

(11) **EP 3 092 752 B1**
(45) Date of publication and mention of the grant of the patent: **30.01.2019**
(21) Application number: 14805737.5
(22) Date of filing: 10.11.2014
(51) Int. Cl.: H04L 12/701

(54) **MULTI-MASTER SELECTION IN A SOFTWARE DEFINED NETWORK**
MULTI-MASTER-AUSWAHL IN EINEM SOFTWAREDEFINIERTEN NETZWERK
SÉLECTION MULTI-MAÎTRE DANS UN RÉSEAU DÉFINI PAR LOGICIEL

(30) Priority: 06.01.2014 US 201414148423
(43) Date of publication of application: 16.11.2016
(73) Proprietor: Google LLC, Mountain View, CA 94043 (US)
(72) Inventor: GANDHAM, Shashidhar Rao, Mountain View, California 94043 (US); CONTAVALLI, Carlo, Mountain View, California 94043 (US)
(74) Representative: Betten & Resch
(86) International application number: PCT/US2014/064830
(87) International publication number: WO 2015/102750

(56) References cited:
- US-A1- 2010 153 055
- US-A1- 2013 329 601
- US-B1- 7 230 920

## Description

### BACKGROUND

A software-defined network ("SDN") is a set of network devices in a data network that includes at least one network device that relies on a separate controller for configuration information such as updates to tables for routing network traffic. Typically, an SDN only has one controller.

The document US 2013/329601 A1 describes a method implemented by a software defined network (SDN) controller, the method comprising receiving, from a network node, a request for path optimization, wherein the request comprises information identifying the network node and a destination node, forwarding the request to an application layer traffic optimization (ALTO) server, receiving, from the ALTO server, path information that identifies a plurality of SDN domains to be traversed from the network node to the destination node, wherein the plurality of SDN domains comprises a first SDN domain, in which the SDN controller resides, and a second SDN domain, in which an edge node known by the SDN controller resides, and determining a first path segment from the network node to the edge node.

Further, the document US 2010/153055 A1 a method which includes receiving, at a first network device, a test initiation message from a control device, wherein the test initiation message includes at least an identification of a second network device. The method may further include retrieving the identification of the second network device from the test initiation message and generating test data including at least source information associated with the first network device, destination information associated with the second network device, and timestamp information associated with a time at which the test data is generated. In addition, the method may include transmitting the test data to the second network device via a data network under test and receiving return test data from the second network device. Further, the method may include generating performance information based on the return test data received from the second network device.

### SUMMARY

The invention is defined in the independent claims. The embodiments or examples of the following description which are not covered by the appended claims are considered as not being part of the invention according to this description. In one aspect, the disclosure relates to a network device with multiple network interface ports, memory storing configuration data, and at least one processor configured to receive a first controller availability message from a first controller device in a plurality of controller devices that includes at least a second controller device, select one of the first controller device and the second controller device as a controller for the network device based at least on the first controller availability message received from the first controller device, and report the selection of the controller device to the selected controller device.

In some implementations, the at least one processor is configured to determine a first value for a performance characteristic of the first controller device and a second value for the performance characteristic of the second controller device, and to select one of the first and second controller devices as a master controller for the network device based on a comparison of the first value and the second value. In some implementations, the performance characteristic is a number of network devices under control by each controller device. In some implementations, the performance characteristic is an average latency for each controller device.

In some implementations, the network device reports the selection to each of the plurality of controller devices. In some implementations, the network device selects the second controller device as a back-up controller for the network device.

In one aspect, the disclosure relates to a method. The method includes receiving, by a network device, a first controller availability message from a first controller device in a plurality of controller devices that includes at least a second controller device, selecting one of the first controller device and the second controller device as a controller for the network device based at least on the first controller availability message received from the first controller device, and reporting the selection of the controller device to the selected controller device. In some implementations, selection is based on a comparison of one or more performance characteristics for the controller devices. The performance characteristics may include a number of network devices under control by each controller device and/or an average latency for each controller device.

In one aspect, the disclosure relates to tangible computer readable storage media storing non-transient processor-executable instructions that, when executed by a computing device comprising the storage media and one or more processors, cause the one or more processors to perform the operations of receiving a first controller availability message from a first controller device in a plurality of controller devices that includes at least a second controller device, selecting one of the first controller device and the second controller device as a controller for the network device based at least on the first controller availability message received from the first controller device, and reporting the selection of the controller device to the selected controller device. In some implementations, selection is based on a comparison of one or more performance characteristics for the controller devices. The performance characteristics may include a number of network devices under control by each controller device and/or an average latency for each controller device.

### BRIEF DESCRIPTION OF THE DRAWINGS

The above and related objects, features, and advantages of the present disclosure will be more fully understood by reference to the following detailed description, when taken in conjunction with the following figures, wherein:
Figure 1 is a block diagram of an example software-defined network;
Figure 2 is a block diagram of an example software-defined network controller and network device separated by a control plane link;
Figure 3 is a flowchart for an example method in which a network device selects a controller;
Figure 4 is a flowchart for an example method in which a network device selects a first available controller;
Figure 5 is a flowchart for an example method in which a network device selects a controller based on performance characteristics;
Figure 6 is a flowchart for an example method in which a network device measures latency as a performance characteristic; and
Figure 7 is a block diagram of a computing system in accordance with an illustrative implementation.

Like reference numbers and designations in the various drawings indicate like elements.

### DETAILED DESCRIPTION

Aspects and implementations of the present disclosure generally relate to selection of a controller by a network device in a software defined network ("SDN"). One characteristic of an SDN is that network devices are controlled by respective separate controllers. For example, routing devices may receive routing configuration rules from a master controller. Typically, an SDN device can have only one master controller at a time. Described herein is an SDN wherein at least one network device selects a master controller from among multiple controllers. A network device can detect that it is to select a master controller (e.g., when the network device is initialized or when its controller fails), select a controller as a master controller, and notify the selected controller of the selection. The selection may be based on one or more considerations, as described herein.

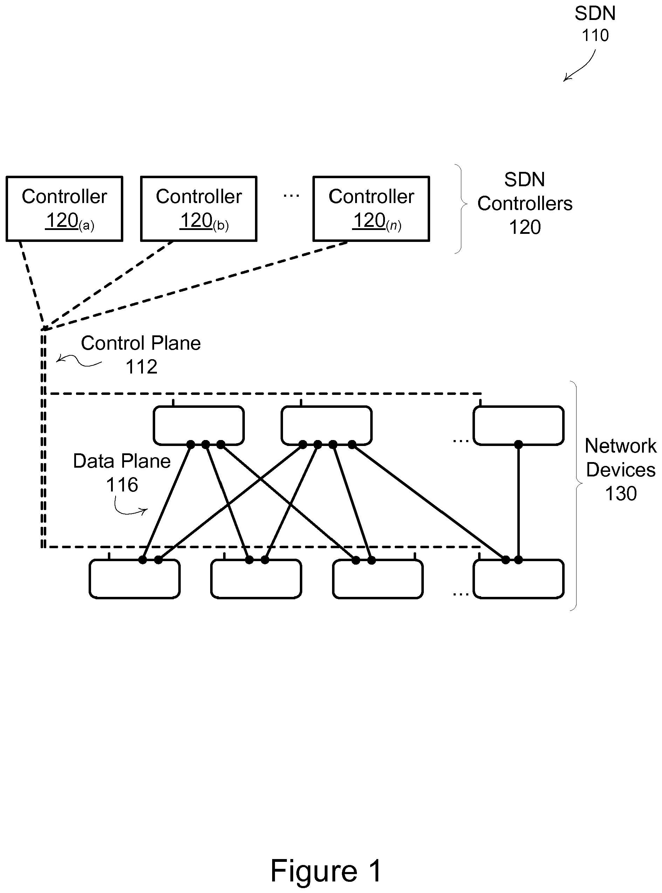

Figure 1 is a block diagram of an example software-defined network ("SDN"). Generally, an SDN is a data network in which some or all of the network devices in the network are controlled by a separate controller. In broad overview, illustrated is an example SDN 110 in which there are multiple SDN controllers 120_{(a-*n*)} (generally referenced as controllers 120) linked to multiple network devices 130 via a control plane 112. The network devices 130 are linked to each other (and/or to devices in other data networks) via a data plane 116.

Each network device 130 participates in a data network by linking other devices together. Network devices facilitate data exchange and typically implement the lower OSI layers, e.g., the physical layer, data link layer, and network layer protocols. Examples of network devices include, but are not limited to, hubs, bridges, switches, and routers. The network devices 130 in an SDN submit to control by a separate controller 120. For example, a router in an SDN allows a separate controller to maintain the routing tables used by the router. Typically, each network device 130 is controlled by one controller 120 at a time. In some implementations, a network device 130 receives additional configuration instructions from a secondary controller; in such implementations, these additional configuration instructions are default or fallback configurations. In some implementations, a network device 130 receives primary configuration instructions from a primary or master controller 120 that override the default or fallback configurations. In some implementations, in the event of a failure or a determination to end control by the master controller, the network device 130 may clear the primary configuration instructions and resort to the default or fallback configurations.

The controllers 120 maintain the network devices 130 in the SDN 110. The controllers may be computing systems linked to the network devices by a control plane 112. In some implementations, the controllers are implemented as virtual machines. In other implementations, the controllers are implemented as special purpose computing systems or as set of computer executable instruction sets stored in computer accessible memory and executed by one or more computing processors. In some implementations, each controller 120 exchanges information, e.g., synchronization information, with the other controllers 120. In some implementations, each controller 120 sends periodic status or availability messages to the network devices 130.

A data plane 116 links the network devices 130 together into a network. The data plane 116 is illustrated in Figure 1 as a set of individual links directly connecting the network devices 130 to each other. In some implementations, the network devices 130 are linked by a data plane that includes a switched fabric. The data plane 116 carries data packets traversing the network.

A control plane 112 links each network device 130 to the controllers 120. The control plane 112 is illustrated in Figure 1 as a set of individual links directly connecting the network devices 130 to the SDN controllers 120. In some implementations, the network devices 130 are linked to the controllers 120 by a control plane that includes a switched fabric. In some implementations, the control plane 112 and the data plane 116 overlap, share links, or are the same physical links. In some implementations, the control plane is wireless. The control plane 112 carries configuration data and control information between the SDN controllers 120 and the network devices 130.

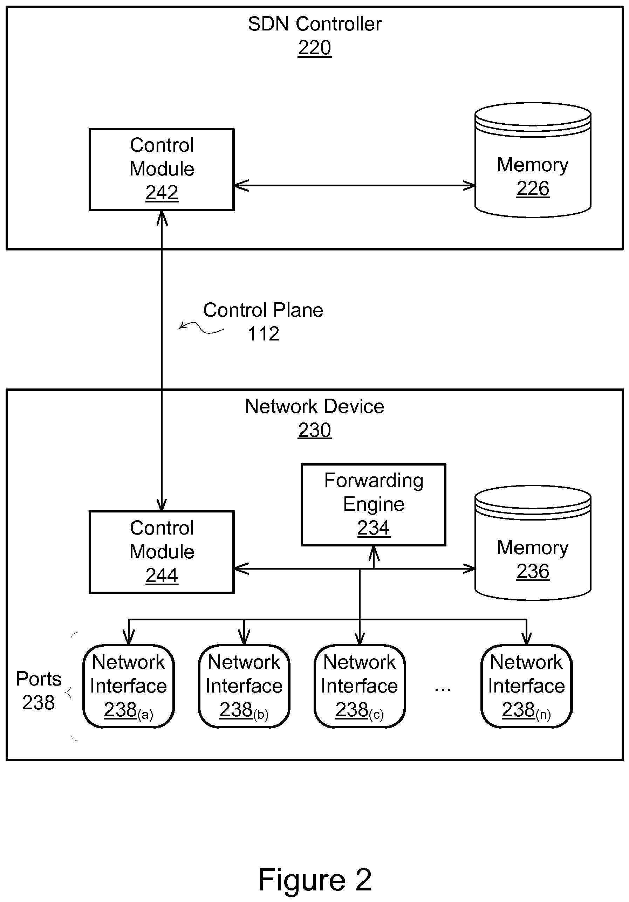

Figure 2 is a block diagram of an example software-defined network ("SDN") controller 220 and network device 230 separated by a control plane link 112. In broad overview, the SDN controller 220 includes a control module 242 and memory 226 storing configuration and routing data. The network device 230 includes a control module 244 and memory 236 storing configuration and routing data. The network device 230 includes a forwarding engine 234 that uses the configuration and routing data in memory 236 to manage data traffic at network interfaces 238_{(a-*n*)} (generally referred to as network interface, or network interface ports, 238). The SDN controller 220 and network device 230 are suitable for use as the SDN controllers 120 and network devices 130 illustrated in Figure 1.

Referring to Figure 2, in more detail, the SDN controller 220 includes a control module 242 and memory 226 storing configuration and routing data. The control module 242 uses the configuration and routing data stored in memory 226 to configure the network device 230. In some implementations, the control module 242 is implemented as a special purpose circuit (e.g., an ASIC). In some implementations, the control module 242 is implemented as a set of computer executable instruction sets stored in computer accessible memory and executed by one or more computing processors. In some implementations, the control module 242 periodically sends a status or availability message to the network device 230.

The network device 230 includes a control module 244 and memory 236 storing configuration and routing data. The network device control module 244 receives configuration and routing information from the SDN controller control module 242 (via the control plane 112) and updates the configuration and routing data stored in memory 236. In some implementations, the control module 244 is implemented as a special purpose circuit (e.g., an ASIC). In some implementations, the control module 244 is implemented as a set of computer executable instruction sets stored in computer accessible memory and executed by one or more computing processors.

The network device 230 includes a set of network interface ports 238. Each network interface port 238 may be connected to the data plane 116. In some implementations, the connections are bi-directional data links. In some implementations, the connections are uni-directional data links, where each link is either ingress or egress. Devices connected to the network device 230 via one or more of the network interface ports 238 exchange data packets with the network device 230, via the data plane 116. For example, a data packet may arrive at the network device 230 via a first interface (e.g., network interface 238₍ₐ₎), causing the network device 230 to process the received data packet and forward it to an appropriate next-hop via a second interface (e.g., network interface 238_{(b)}). The forwarding engine 234 determines which network interface 238 to use to forward each data packet received.

The forwarding engine 234 uses the configuration and routing data in memory 236 to manage the data traffic at network interface ports 238. The configuration and routing data in memory 236 are controlled by the SDN controller 220 via the control module 244.

In some implementations, the network device 230 is linked to multiple SDN controllers 220. In such implementations, the network device 230 determines which of the multiple SDN controllers 220 can send it configuration and routing information; that is, the network device 230 submits to control by an SDN controller 220 selected by the network device 230. The network device control module 244 selects the SDN controller 220 for the network device 230. In some implementations, the network device control module 244 determines to select an SDN controller and initiates a selection routine. The network device control module 244 then notifies the selected SDN controller that the network device 230 will submit to control by the selected SDN controller.

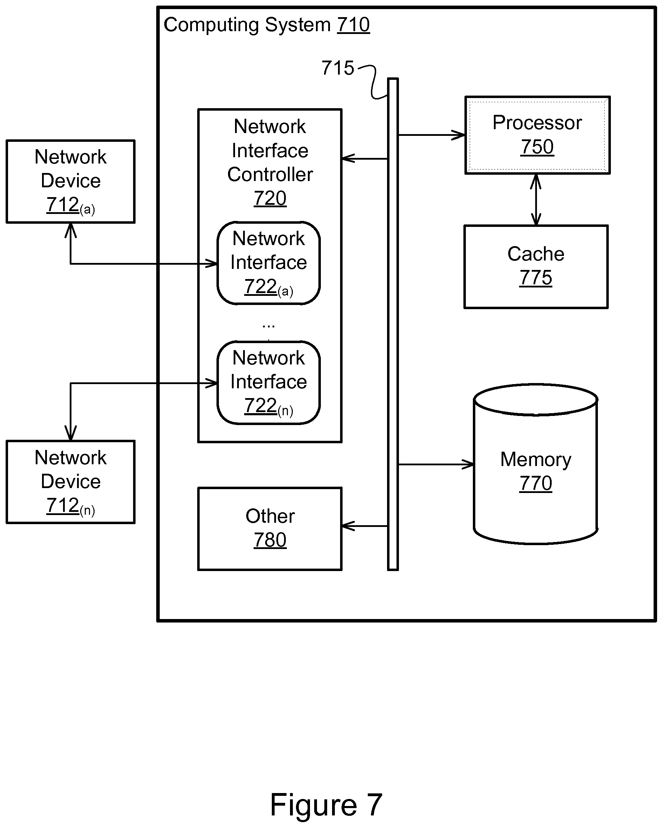

The SDN controller memory 226 and the network device memory 236 may each be any device suitable for storing computer readable data. The memory may be similar to the memory 770 illustrated in Figure 7 and described below. Examples include, but are not limited to, semiconductor memory devices such as EPROM, EEPROM, SDRAM, and flash memory devices. An SDN controller 220 may have any number of memory devices 226. A network device 230 may have any number of memory devices 236.

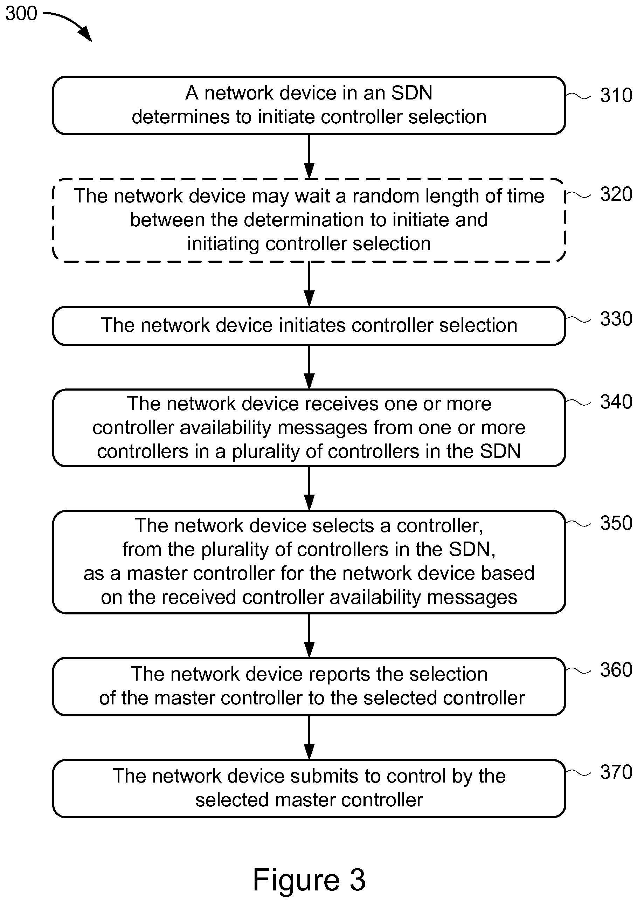

Figures 3-6 are flowcharts illustrating methods used in selecting a master controller for a network device. In each method, a network device selects an SDN controller as a master controller for the network device. In general, there are many reasons why a network device might select a master controller. These include, as examples: the network device may be in an initialization phase, e.g., after installation or a restart and thus may not have an existing master controller; the network device may receive a control message instructing it to select a new master controller, e.g., the controller may explicitly reject the network device; the network device may be configured to periodically reselect a master controller; or there may be a failure in communicating with a selected master controller, e.g., a controller may have failed or a communication link to a controller may have failed. A network device may detect a failure by monitoring for periodic messages from a controller or by periodically testing the status of its master controller. In some implementations, the SDN controllers 120 send out periodic messages (e.g., "keep-alive" messages) to the network devices 130. The messages may be broadcast to all of the network devices or sent only to the devices for which the controller is responsible. In some implementations, the controllers 120 send periodic availability messages to all of the network devices and these availability messages function as keep-alive messages. In some implementations, the network devices periodically request a response from their respective master controllers, e.g., by sending an ICMP echo request ("ping").

Figure 3 is a flowchart for an example method 300 in which a network device selects a controller. In broad overview, the method 300 begins with a network device in an SDN determining that it is to select a new master SDN controller (stage 310) and initiating controller selection (stage 330). The network device receives one or more controller availability messages from one or more controllers in a plurality of controllers included in the SDN (stage 340). The network device selects a controller, from the plurality of SDN controllers, as a master controller for the network device based on the received controller availability messages (stage 350). The network device then reports the selection of the master controller to the selected master controller (stage 360) and submits to control by the selected master controller (stage 370).

In more detail, in the method 300, a network device in an SDN determines to initiate controller selection (stage 310). The determination may be made as described above. In some implementations, the network device may determine to initiate controller selection responsive to detecting that it does not have a master controller. In some implementations, the network device may determine to initiate controller selection responsive to an event such as receipt of a message instructing the network device to select a new master controller or expiration of a timer.

In some implementations, the network device may wait a random length of time (stage 320) between the determination to select a new master controller (stage 310) and initiating controller selection (stage 330). In some scenarios, multiple network devices may be concurrently selecting a replacement master controller. For example, a previous master controller may have failed, leaving many network devices without a master controller. Other example scenarios include situations in which a communications link to the previous master controller has failed or where a number of new network devices are installed together. In some implementations, in order to avoid having multiple network devices concurrently select and overload the same master controller, each network device waits a random length of time (stage 320) after determining to select a master controller (stage 310) before progressing with the selection process. In some implementations, this waiting period may be implemented as part of initiating controller selection (stage 330); that is, initiation may include a random delay phase.

In the method 300, responsive to the determination in stage 310, the network device initiates controller selection (stage 330). In some implementations, the network device initiates a selection routine that includes gathering and processing information for selecting a master controller. In some implementations, the network device routinely gathers information and is able to select a master controller responsive to the determination that it needs to do so.

In some implementations, a network device has both a master controller and a back-up controller. In some such implementations, when the network device determines to select a new master controller, the network device uses configuration instructions received from the back-up controller until a new master controller is selected by the network device. In some implementations, instead of selecting a new master controller, when the network device determines it is appropriate to switch to a new master controller, the back-up controller can assume the role of master controller and the network device initiates selection of a new back-up controller.

The network device receives one or more controller availability messages from one or more controllers in a plurality of controllers included in the SDN (stage 340). In some implementations, the SDN controllers 120 periodically send availability messages. In some such implementations, the messages are sent at regular intervals. In some implementations, periodic messages are sent at irregular intervals, e.g., a random interval plus a random time length such that the controllers do not consistently broadcast availability simultaneously. In some implementations, the SDN controllers 120 send availability messages responsive to a request, e.g., a request from a network device 130 seeking a controller.

In some implementations, the availability messages are broadcast throughout the SDN. In some implementations, the SDN controllers 120 send the messages to specific network addresses, e.g., addresses for network devices. For example, an SDN controller may maintain a list of addresses, or address ranges, for network devices that the controller might prospectively control. In some implementations, the SDN control plane 112 is physically distinct from the data plane 116 and a broadcast on the control plane 112 is effectively targeted to the network devices 130 that may be controlled by the controllers 120.

In some implementations, the availability messages are simple identifiers alerting recipients that the controller identified by the message is available. In some implementations, the availability messages include one or more items of information including, for example, a number of network devices controlled by the controller, a capacity indicator, a machine identifier, a geographic identifier, a timestamp, a time active, a Lamport timestamp, a sequence number, a version number, or status information.

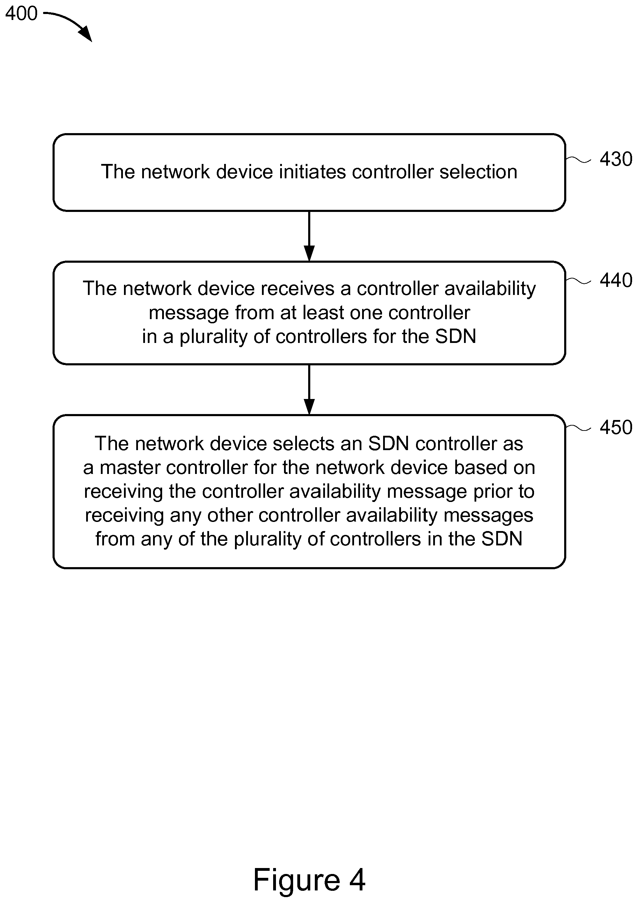

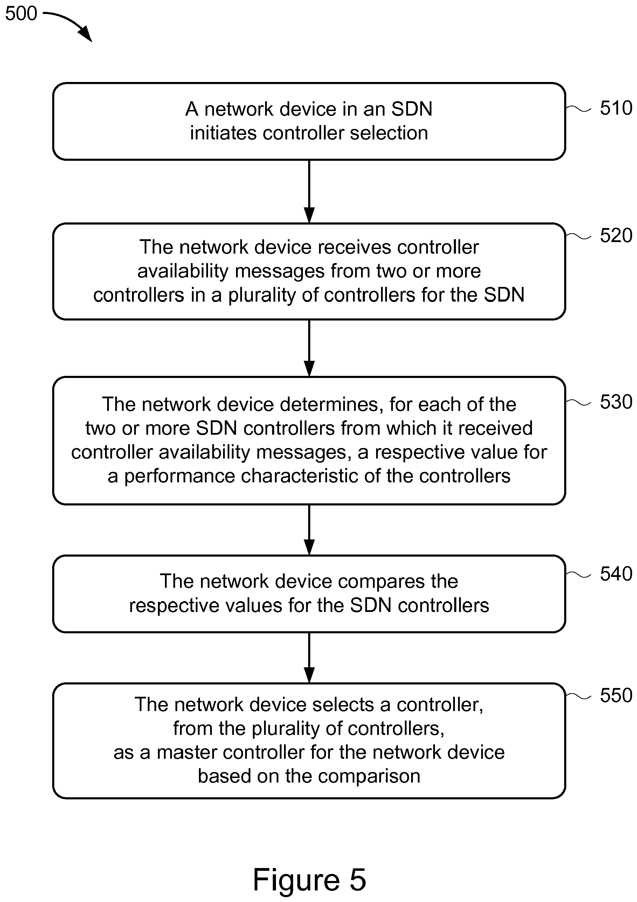

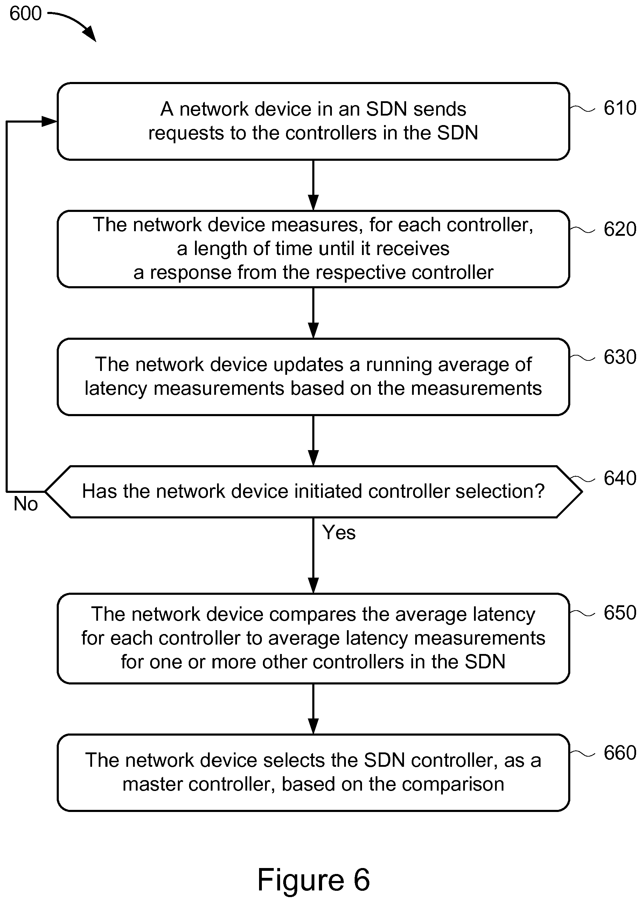

Continuing with the method 300, in detail, the network device selects an SDN controller, from the plurality of controllers, as a master controller for the network device based on the received controller availability messages (stage 350). The network device 130 gathers and processes the one or more availability messages received in stage 240. The network device 130 uses information indicated in, or inferred from, the one or more messages to select a controller 120 to use as a master controller for the network device 130. In some implementations, as described below in reference to Figure 4, the network device 130 selects the first SDN controller 120 from which it receives an availability message after initiation of controller selection at stage 330. In some implementations, the network device 130 selects the controller 120 with the most desirable properties. For example, as described below in reference to Figure 5, the network device may compare one or more characteristics (or values representative of characteristics) of the available SDN controllers and base the selection on the comparison. In some such implementations, the network device 120 selects for a controller 120 with the lower load, with greater capacity, with less latency, with closer proximity, or with some desirable combination thereof. For example, as described below in reference to Figure 6, the network device 130 may measure latency in controller communication time and use the latency measurements to select a controller 120 as a master controller for the network device 130.

As indicated above, in some implementations, the network device 130 also selects a second controller 120 to use as a secondary (or back-up) controller. In some implementations, a secondary controller manages default or fallback configuration details for the network device 130 such that the master controller has full control but the network device is prepared for a controller change. For example, the network device 130 may maintain default configuration data received from the selected secondary controller. The network device 130 may use the default configuration data in the absence of specific configuration data. When the network device 130 receives specific configuration data from a master controller, the specific configuration data takes priority over the default configuration data. Thus the master controller has control of the network device 130. In the event of a failure or termination of the network device / master controller relationship, the network device can clear the configuration data received from the master controller and resort to the default configurations set by the secondary controller. In some implementations, the network device waits a length of time after the aforementioned failure or termination before clearing the specific configuration data received from the master controller. In some implementations, the network device automatically selects the secondary controller as the master controller and only selects, at stage 350, a new secondary controller.

The network device then reports the selection of the master controller to the selected master controller (stage 360). The network device 130 notifies the selected controller 120 to begin sending control messages and submits to control messages received from the selected SDN controller 120. In some implementations, the network device 120 sends selection messages to all of the controllers in the SDN to notify them of the controller selected as a master controller. In some implementations, the network device selects a secondary controller as a back-up or fallback controller. In some implementations, when a network device selects a master controller and a secondary controller, the network device sends messages to each controller to notify them of the selection. If a selected controller 120 refuses to be selected (e.g., the selected controller is overloaded or otherwise unable to accept the selection), the network device 130 may repeat the method 300 and select a new SDN controller 130. In some such implementations, the network device may disqualify the controller that refused selection, or otherwise reduce the likelihood of re-selecting a controller that has refused selection. For example, the network device 130 may avoid selecting a controller 120 that has refused selection within a fixed period of time (e.g., the last 30 seconds) such that the controller 120 is later restored as an option, thereby reducing the likelihood that the network device 130 is starved of an SDN controller 120.

The network device 130 then submits to control by the selected master controller device (stage 370). The network device 130 may receive control messages from the selected master controller. The network device 130 may receive configuration and/or routing instructions from the selected master controller. The network device 130 can prioritize messages received from the selected master controller 120 and can refuse instructions from the other controllers 120 in the SDN. In some implementations, as indicated above, the network device 130 can also select a secondary controller 120 as a back-up or fallback controller. In such implementations, the network device may also receive and process control messages from the selected secondary controller. For example, the secondary controller may manage default configurations for the network device 130, as described above.

Figure 4 is a flowchart for a method 400 in which a network device selects a first available controller. In broad overview, the method 400 begins with a network device in an SDN initiating selection of a master controller (stage 430). The network device receives a controller availability message from at least one SDN controller in a plurality of controller devices included in the SDN (stage 440). The network device selects an SDN controller as a master controller for the network device based on receiving the controller availability message for that SDN controller prior to receiving any other controller availability messages from any of the plurality of controllers in the SDN (stage 450).

In more detail, in the method 400, the network device initiates controller selection (stage 430). As described above, in reference to Figure 3, the network device 130 determines to select a new master controller 120 and initiates controller selection. In some implementations, the network device 130 waits a random period of time between determining to select a new master controller 120 and initiating the controller selection. In some implementations, initiating the controller selection at stage 430 includes beginning to "listen" for controller availability messages (that is, in some implementations, the network device 130 may routinely receive and ignore controller availability messages -once the network device 130 has determined to select a new master controller 120, and in some implementations after a brief random delay, the network device 130 begins to process received controller availability messages in order to make a selection).

The network device 130 receives a controller availability message from at least one controller 120 in a plurality of controllers included in the SDN (stage 440). In some implementations, each SDN controller 120 periodically transmits availability messages. A network device 130 receives these messages while selecting a new master controller 120 (stage 430). The network device may receive multiple availability messages. In some implementations, the network device orders availability messages by when they were received. In some implementations, the network device orders availability messages by sequencing information in the messages, e.g., controller timestamps, network timestamps, or Lamport timestamps. In some implementations, the network device maintains a buffer for information from only the most recently received availability message, each message replacing any previously received information.

The network device 130 selects an SDN controller 120 as a master controller for the network device 130 based on receiving the controller availability message prior to receiving any other controller availability messages from any of the plurality of controllers 120 in the SDN (stage 450). That is, the network device 130 selects the first SDN controller 120 from which it receives an availability message after initiation of controller selection at stage 430. In some implementations, the network device 130 selects the first SDN controller 120 from which it receives an availability message after waiting a random length of time (e.g., as described above in reference to stage 320). In some implementations, the network device 130 selects the master controller 120 that sent the first received controller availability message when the network device 130 has not received any additional controller availability messages after a length of time.

Figure 5 is a flowchart for a method 500 in which a network device selects a controller based on performance characteristics. In broad overview, the method 500 begins with a network device in an SDN initiating selection of a master controller (stage 510). The network device receives controller availability messages from two or more controllers in a plurality of controllers included in the SDN (stage 520). The network device determines, for each of the two or more SDN controllers from which it received controller availability messages, a respective value for a performance characteristic of the controllers (stage 530). The network device compares the respective values for the SDN controllers (stage 540). The network device selects a controller, from the plurality of controllers, as a master controller for the network device based on the comparison (stage 550).

In more detail, in the method 500, the network device initiates controller selection (stage 510). As described above, in reference to Figure 3, the network device 130 determines to select a new master controller 120 and initiates controller selection. In some implementations, the network device 130 waits a random period of time between determining to select a new master controller 120 and initiating the controller selection. In some implementations, initiating the controller selection at stage 510 includes beginning to "listen" for controller availability messages.

The network device 130 receives controller availability messages from two or more controllers 120 in a plurality of controllers included in the SDN (stage 520). In some implementations, the network device processes each availability message as each message arrives to identify information about the controller sending the message. In some implementations, the network device maintains a buffer for multiple availability messages and places incoming availability messages in the buffer until they can be processed.

The network device determines, for each of the two or more controllers from which it received controller availability messages, a respective value for a performance characteristic of the SDN controllers (stage 530). The network device 130 receives the controller availability messages (in stage 520) and processes them to determine characteristic information about the sending SDN controllers 120. For example, the network device 130 may determine, from a controller availability message, an identity of the sending SDN controller 120, a current load level for the sending SDN controller 120, capacity levels for the sending SDN controller 120, and/or communication transit time from when the availability message was sent to when it was received. In some implementations, the network device processes all controller availability messages regardless of if the network device is selecting a master controller. When the network device has received and processed the controller availability messages, the network device may have the information it will use to select a master controller.

The performance characteristic may be a count of the number of network devices controlled by a respective controller, either as a master controller, as a secondary controller, or both. The performance characteristic may be an indicator of capacity at the respective controller, e.g., how many more network devices the respective controller could control. The performance characteristic may be a measure of latency for communication between the network device and the respective controller. Latency may be measured, for example, using the method illustrated in Figure 6 and described below. In some implementations, latency is measured by sending a request and measuring a length of time until a response to the request is received. In some implementations, latency is measured by comparing a sent timestamp in an availability message to a current time at the network device (e.g., using clocks synchronized by the NTP network time protocol). The performance characteristic may be an indicator of distance to the SDN controller, e.g., a number of hops through the control plane.

The network device then compares the respective values for the SDN controllers (stage 540) and selects a controller, from the plurality of SDN controllers, as a master controller for the network device based on the comparison (stage 550). The network device 130 may select a master controller 120 based on preferred characteristic values individually or in combination. For example, the network device may select a controller with the lowest count of network devices under its control or may select the controller with the lowest latency. In some implementations, multiple characteristics are used in the comparison (at stage 540). For example, the network device may determine a ratio of controller capacity to latency and select the controller with the best ratio. This may result in a selection of a controller with less capacity but also less latency or selection of a controller with higher capacity but not the lowest latency. After selecting a master controller, the network device sends a message to the master controller (as in stage 360 in Figure 3) and submits to control by the selected master controller (as in stage 370 in Figure 3).

Figure 6 is a flowchart for a method in which a network device measures latency as a performance characteristic. In broad overview, in the method 600, a network device 130 in an SDN 110 sends requests to controllers 120 in the SDN (stage 610). The network device 130 measures, for each SDN controller 120, a length of time until it receives a response from the respective controller (stage 620). The network device updates a running average of latency measurements (for each controller) based on the measured length of time (stage 630). The network device 130 repeats the cycle of stages 610-630 until the network device initiates controller selection (e.g., stage 330 in Figure 3 or stage 510 in Figure 5). When the network device has initiated selection of a master controller (stage 640), the network device compares the average latency for each SDN controller to average latency measurements for one or more other controllers in the SDN (stage 650). The network device then selects the SDN controller 120, as a master controller for the network device 130, based on the comparison (stage 660).

In more detail, in the method 600, a network device in an SDN sends a request to a controller in the SDN (stage 610). For example, in some implementations, the network device 130 sends an ICMP echo request (a "ping") or other request message to induce a response from an SDN controller 120. In some implementations, the network device 130 sends the request periodically, i.e., at predetermined intervals. The interval may be a configuration controlled by an SDN controller 120. In some implementations, the network device 130 sends the request responsive to an event. For example, the network device 130 may send the request to an SDN controller 120 after a predetermined length of time has elapsed since receipt, by the network device 130, of an availability message from the controller 120.

For each SDN controller, the network device measures a length of time until it receives a response from the SDN controller (stage 620). Each request sent to a controller in stage 610 induces a response from the respective controller; the network device 130 measures the time span from when the specific request was sent by the network device until the induced response is received by the network device. This time span includes time spent by the request message in transit, time spent by the controller 120 processing the request, and time spent by the response in transit. Therefore, the measurement encompasses network congestion in both directions and processing delays at the particular controller 120. In some implementations, if a network device 130 does not receive a response from an SDN controller 120 within a configurable length of time, the network device 130 assumes a high latency and uses a placeholder value for measured latency to that controller.

The network device then updates a running average of latency measurements for each SDN controller based on the measured length of time for a response from the respective controller (stage 630). In some implementations, the network device calculates an average latency (L_{avg}) as a mean of the last n latency measurements, which the network device maintains in memory (e.g., in a circular buffer): L_{avg} = sum(Lₘₑₐₛᵤᵣₑₘₑₙₜₛ)/*n.* In some implementations, the network device calculates an average latency (L_{avg}) as the length of time (L_{new}) measured in stage 620 multiplied by a weight (e.g., a value α between zero and one) plus the previous average (L_{prev_avg}) multiplied by a second weight (e.g., 1-α): L_{avg} = α L_{new} + (1-α) L_{prev_avg}. The weight (α) may be selected to emphasize or de-emphasize the most recent measurement.

As described above, e.g., in reference to Figure 3, the network device initiates selection of a master controller. If the network device has not initiated controller selection (stage 640), it may wait a fixed or random period of time and then repeat stages 610-630 to update the running averages of latency for the different controllers in the SDN 110. If the network device has initiated controller selection (stage 640), it proceeds to use the latency measurements in selecting a new master controller.

The network device compares the average latency for each controller to average latency measurements for one or more other controllers in the SDN (stage 650). That is, the network device 130 has maintained average latency measurements for each controller 120 in the SDN 110 and compares the maintained average latency measurements to each other. The network device 130 then selects an SDN controller 120, as a master controller for the network device 130, based on the comparison (stage 660). In some implementations, the network device selects the controller with the lowest average latency ("least latent controller"), as compared to measured average latency for the other controllers in the SDN. The least latent controller may have less congestion in the control plane and/or greater control capacity.

After selecting a master controller, the network device sends a message to the master controller (as in stage 360 in Figure 3) and submits to control by the selected master controller (as in stage 370 in Figure 3).

Figure 7 is a block diagram of a computing system for use in implementing the computerized components described herein, in accordance with an illustrative implementation. In broad overview, the computing system includes at least one processor 750 for performing actions in accordance with instructions and one or more memory devices 770 or 775 for storing instructions and data. The illustrated example computing system 710 includes one or more processors 750 in communication, via a bus 715, with at least one network interface controller 720 with network interface ports 722₍ₐ₋ₙ₎ connecting to network devices 712₍ₐ₋ₙ₎, memory 770, and any other devices 780, e.g., an I/O interface. Generally, a processor 750 will execute instructions received from memory. The processor 750 illustrated incorporates, or is directly connected to, cache memory 775.

In more detail, the processor 750 may be any logic circuitry that processes instructions, e.g., instructions fetched from the memory 770 or cache 775. In many embodiments, the processor 750 is a microprocessor unit or special purpose processor. The computing device 710 may be based on any processor, or set of processors, capable of operating as described herein. The processor 750 may be a single core or multi-core processor. The processor 750 may be multiple processors.

The memory 770 may be any device suitable for storing computer readable data. The memory 770 may be a device with fixed storage or a device for reading removable storage media. Examples include all forms of non-volatile memory, media and memory devices, semiconductor memory devices (e.g., EPROM, EEPROM, SDRAM, and flash memory devices), magnetic disks, magneto optical disks, and optical discs (e.g., CD ROM, DVD-ROM, and Blu-Ray® discs). A computing system 710 may have any number of memory devices 770.

The cache memory 775 is generally a form of computer memory placed in close proximity to the processor 750 for fast read times. In some implementations, the cache memory 775 is part of, or on the same chip as, the processor 750. In some implementations, there are multiple levels of cache 775, e.g., L2 and L3 cache layers.

The network interface controller 720 manages data exchanges via the network interfaces 722₍ₐ₋ₙ₎ (also referred to as network interface ports). The network interface controller 720 handles the physical and data link layers of the OSI model for network communication. In some implementations, some of the network interface controller's tasks are handled by the processor 750. In some implementations, the network interface controller 720 is part of the processor 750. In some implementations, a computing system 710 has multiple network interface controllers 720. The network interfaces 722₍ₐ₋ₙ₎ are connection points for physical network links. In some implementations, the network interface controller 720 supports wireless network connections and an interface port 722 is a wireless receiver/transmitter. Generally, a computing device 710 exchanges data with other computing devices 712₍ₐ₋ₙ₎ via physical or wireless links to a network interface 722₍ₐ₋ₙ₎. In some implementations, the network interface controller 720 implements a network protocol such as Ethernet.

The other computing devices 712₍ₐ₋ₙ₎ are connected to the computing device 710 via a network interface port 722. The other computing devices 712₍ₐ₋ₙ₎ may be peer computing devices, network devices, or any other computing device with network functionality. For example, a first computing device 712₍ₐ₎ may be a network device such as a hub, a bridge, a switch, or a router, connecting the computing device 710 to a data network such as the Internet.

The other devices 780 may include an I/O interface, external serial device ports, and any additional co-processors. For example, a computing system 710 may include an interface (e.g., a universal serial bus (USB) interface) for connecting input devices (e.g., a keyboard, microphone, mouse, or other pointing device), output devices (e.g., video display, speaker, or printer), or additional memory devices (e.g., portable flash drive or external media drive). In some implementations, a computing device 710 includes an additional device 780 such as a co-processor, e.g., a math co-processor can assist the processor 750 with high precision or complex calculations.

Implementations of the subject matter and the operations described in this specification can be implemented in digital electronic circuitry, or in computer software embodied on a tangible medium, firmware, or hardware, including the structures disclosed in this specification and their structural equivalents, or in combinations of one or more of them. Implementations of the subject matter described in this specification can be implemented as one or more computer programs embodied on a tangible medium, i.e., one or more modules of computer program instructions, encoded on one or more computer storage media for execution by, or to control the operation of, a data processing apparatus. A computer storage medium can be, or be included in, a computer-readable storage device, a computer-readable storage substrate, a random or serial access memory array or device, or a combination of one or more of them. The computer storage medium can also be, or be included in, one or more separate components or media (e.g., multiple CDs, disks, or other storage devices). The computer storage medium may be tangible and non-transitory.

The operations described in this specification can be implemented as operations performed by a data processing apparatus on data stored on one or more computer-readable storage devices or received from other sources.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network. Examples of communication networks include a local area network ("LAN") and a wide area network ("WAN"), an inter-network (e.g., the Internet), and peer-to-peer networks (e.g., ad hoc peer-to-peer networks).

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application specific integrated circuit).

While this specification contains many specific implementation details, these should not be construed as limitations on the scope of any inventions or of what may be claimed, but rather as descriptions of features specific to particular implementations of particular inventions. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

References to "or" may be construed as inclusive so that any terms described using "or" may indicate any of a single, more than one, and all of the described terms. The labels "first," "second," "third," an so forth are not necessarily meant to indicate an ordering and are generally used merely to distinguish between like or similar items or elements.

Thus, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking or parallel processing may be utilized.

## Claims

1. A network device (230) configured for a software-defined network, SDN, the network device (230) comprising multiple network interface ports (238), memory (236) storing configuration data, and at least one processor (244) **characterised in that** the processor is configured to:
receive a first controller availability message from a first controller device in a plurality of controller devices, the plurality of controller devices comprising at least a second controller device;
determine, responsive to receiving the first controller availability message from the first controller device, a first value for a performance characteristic of the first controller device;
receive a second controller availability message from the second controller device in the plurality of controller devices;
determine, responsive to receiving the second controller availability message from the second controller device, a second value for the performance characteristic of the second controller device;
select one of the first controller device and the second controller device as a controller for the network device (230) based at least on the first controller availability message received from the first controller device and a comparison of the first value and the second value; and
report, to each of the plurality of controller devices, the selection of the controller device for the network device (230).

2. The network device (230) of claim 1, wherein the at least one processor (244) is configured to:
select the first controller device as the controller for the network device (230) based on receiving the first controller availability message prior to receiving any other controller availability messages from any of the plurality of controller devices.

3. The network device (230) of claim 1, wherein the performance characteristic is a number of network devices under control by each controller device, and the at least one processor (244) is configured to:
receive a first count of other network devices controlled by the first controller device and a second count of other network devices controlled by the second controller device; and select the controller having the lower count of other network devices under its control.

4. The network device (230) of claim 1, wherein the performance characteristic is latency for each controller device, the at least one processor (244) configured to:
measure respective communication latencies between the network device (230) and the first and second controllers; and
select the controller having the lowest latency.

5. The network device (230) of claim 1, wherein the at least one processor (244) is configured to wait a random length of time prior to selecting the controller device, and/or
wherein the network device (230) is in a plurality of network devices comprising at least a second network device controlled by the second controller device.

6. The network device (230) of claim 1, the at least one processor (244) configured to select the other of the first controller device and the second controller device as a back-up controller for the network device, and/or to report to the first controller device and to the second controller device the selection of the back-up controller for the network device.

7. A method (300) performed for a software-defined network, SDN, the method comprising:
receiving , by a network device comprising multiple network interface ports, memory storing configuration data, and at least one computing processor, a first controller availability message from a first controller device in a plurality of controller devices, the plurality of controller devices comprising at least a second controller device;
determining, by the network device, responsive to receiving the first controller availability message from the first controller device, a first value for a performance characteristic of the first controller device;
determining, by the network device, responsive to receiving a second controller availability message from the second controller device, a second value for the performance characteristic of the second controller device; and
selecting, by the network device, one of either the first controller device or the second controller device as a controller for the network device based at least on the first controller availability message received from the first controller device and a comparison of the first value and the second value; and
reporting, by the network device, to each of the plurality of controller devices, the selection of the controller device for the network device.

8. The method of claim 7, the method comprising:
selecting, by the network device, the first controller device as the controller for the network device based on receiving the first controller availability message prior to receiving any other controller availability messages from any of the plurality of controller devices.

9. The method of claim 7, wherein the performance characteristic is a number of network devices under control by each controller device, the method comprising:
receiving a first count of other network devices controlled by the first controller device and a second count of other network devices controlled by the second controller device; and selecting the controller having the lower count of other network devices under its control.

10. The method of claim 7, wherein the performance characteristic is latency for each controller device, the method comprising:
measuring respective communication latencies between the network device and the first and second controllers;
selecting the controller having the lowest latency;
determining, by the network device, that the network device needs a controller device;
and/or
waiting, by the network device, a random length of time after the determining, prior to selecting the controller device.

11. The method of claim 7, wherein the network device is in a network comprising a plurality of network devices comprising at least a second network device controlled by the second controller device.

12. The method of claim 7, the method comprising:
selecting, by the network device, as a back-up controller for the network device, the other of the first controller device and the second controller device not selected as controller for the network device, and/or
reporting to the first controller device and to the second controller device the selection of the back-up controller for the network device.

13. Tangible computer readable storage media storing non-transient processor-executable instructions that, when executed by a computing device comprising the storage media and one or more processors, cause the one or more processors to perform the operations of one of claims 7 to 12.

## Patentansprüche

1. Netzwerkvorrichtung (230), die für ein softwaredefiniertes Netzwerk, SDN, konfiguriert ist, wobei die Netzwerkvorrichtung (230) mehrere Netzwerkschnittstellenports (238), einen Speicher (236), der Konfigurationsdaten speichert, und mindestens einen Prozessor (244) umfasst, **dadurch gekennzeichnet, dass** der Prozessor für Folgendes konfiguriert ist:
Empfangen einer ersten Steuerungsverfügbarkeitsmeldung von einer ersten Steuerungsvorrichtung unter einer Mehrzahl von Steuerungsvorrichtungen, wobei die Mehrzahl von Steuerungsvorrichtungen mindestens eine zweite Steuerungsvorrichtung umfasst;
Bestimmen, als Antwort auf Empfangen der ersten Steuerungsverfügbarkeitsmeldung und von der ersten Steuerungsvorrichtung, eines ersten Wertes für eine Leistungscharakteristik der ersten Steuerungsvorrichtung;
Empfangen einer zweiten Steuerungsverfügbarkeitsmeldung von der zweiten Steuerungsvorrichtung unter der Mehrzahl von Steuerungsvorrichtungen;
Bestimmen, als Antwort auf Empfangen der zweiten Steuerungsverfügbarkeitsmeldung und von der zweiten Steuerungsvorrichtung, eines zweiten Wertes für die Leistungscharakteristik der zweiten Steuerungsvorrichtung;
Auswählen einer der ersten Steuerungsvorrichtung und der zweiten Steuerungsvorrichtung als Steuerung für die Netzwerkvorrichtung (230) basierend auf mindestens der ersten von der ersten Steuerungsvorrichtung empfangenen Steuerungsverfügbarkeitsmeldung und einem Vergleich des ersten Wertes und des zweiten Wertes; und
Berichten der Auswahl der Steuerungsvorrichtung für die Netzwerkvorrichtung (230) an jede der Mehrzahl von Steuerungsvorrichtungen.

2. Netzwerkvorrichtung (230) nach Anspruch 1, wobei der mindestens eine Prozessor (244) für Folgendes konfiguriert ist:
Auswählen der ersten Steuerungsvorrichtung als die Steuerung für die Netzwerkvorrichtung (230) basierend auf Empfangen der ersten Steuerungsverfügbarkeitsmeldung vor Empfangen irgendwelcher anderer Steuerungsverfügbarkeitsmeldungen von irgendeiner der Mehrzahl von Steuerungsvorrichtungen.

3. Netzwerkvorrichtung (230) nach Anspruch 1, wobei die Leistungscharakteristik eine Anzahl von Netzwerkvorrichtungen ist, die von jeder Steuerungsvorrichtung gesteuert werden, und der mindestens eine Prozessor (244) für Folgendes konfiguriert ist:
Empfangen einer ersten Anzahl anderer Netzwerkvorrichtungen, die von der ersten Steuerungsvorrichtung gesteuert werden, und einer zweiten Anzahl anderer Netzwerkvorrichtungen, die von der zweiten Steuerungsvorrichtung gesteuert werden; und
Auswählen der Steuerung mit der niedrigeren Anzahl von anderen Netzwerkvorrichtungen unter seiner Steuerung.

4. Netzwerkvorrichtung (230) nach Anspruch 1, wobei die Leistungscharakteristik eine Latenz für jede Steuerungsvorrichtung ist, wobei der mindestens eine Prozessor (244) für Folgendes konfiguriert ist:
Messen von jeweiligen Kommunikationslatenzen zwischen der Netzwerkvorrichtung (230) und der ersten und zweiten Steuerung; und
Auswählen der Steuerung mit der niedrigsten Latenz.

5. Netzwerkvorrichtung (230) nach Anspruch 1, wobei der mindestens eine Prozessor (244) dazu konfiguriert ist, eine beliebige Zeitspanne zu warten, bevor die Steuerungsvorrichtung ausgewählt wird, und/oder
wobei die Netzwerkvorrichtung (230) unter einer Mehrzahl von Netzwerkvorrichtungen ist, die mindestens eine zweite Netzwerkvorrichtung umfasst, die durch die zweite Steuerungsvorrichtung gesteuert wird.

6. Netzwerkvorrichtung (230) nach Anspruch 1, wobei der mindestens eine Prozessor (244) dazu konfiguriert ist, die jeweils andere der ersten Steuerungsvorrichtung und der zweiten Steuerungsvorrichtung als Backup-Steuerung für die Netzwerkvorrichtung auszuwählen, und/oder der ersten Steuerungsvorrichtung und der zweiten Steuerungsvorrichtung die Auswahl der Backup-Steuerung für die Netzwerkvorrichtung zu berichten.

7. Verfahren (300), das für ein softwaredefiniertes Netzwerk, SDN, durchgeführt wird, wobei das Verfahren umfasst:
Empfangen, durch eine Netzwerkvorrichtung, die mehrere Netzwerkschnittstellenports, einen Speicher, der Konfigurationsdaten speichert, und mindestens einen Rechenprozessor umfasst, einer ersten Steuerungsverfügbarkeitsmeldung von einer ersten Steuerungsvorrichtung unter einer Mehrzahl von Steuerungsvorrichtungen, wobei die Mehrzahl von Steuerungsvorrichtungen mindestens eine zweite Steuerungsvorrichtung umfasst;
Bestimmen, durch die Netzwerkvorrichtung, als Antwort auf das Empfangen der ersten Steuerungsverfügbarkeitsmeldung von der ersten Steuerungsvorrichtung, eines ersten Wertes für eine Leistungscharakteristik der ersten Steuerungsvorrichtung;
Bestimmen, durch die Netzwerkvorrichtung, als Antwort auf das Empfangen einer zweiten Steuerungsverfügbarkeitsmeldung von der zweiten Steuerungsvorrichtung, eines zweiten Wertes für die Leistungscharakteristik der zweiten Steuerungsvorrichtung; und
Auswählen, durch die Netzwerkvorrichtung, einer der entweder ersten Steuerungsvorrichtung oder zweiten Steuerungsvorrichtung als Steuerung für die Netzwerkvorrichtung basierend mindestens auf der ersten von der ersten Steuerungsvorrichtung empfangenen Steuerungsverfügbarkeitsmeldung und einem Vergleich des ersten Wertes und des zweiten Wertes; und
Berichten, durch die Netzwerkvorrichtung, der Auswahl der Steuerungsvorrichtung für die Netzwerkvorrichtung an jede der Mehrzahl von Steuerungsvorrichtungen.

8. Verfahren nach Anspruch 7, wobei das Verfahren umfasst:
Auswählen, durch die Netzwerkvorrichtung, der ersten Steuerungsvorrichtung als Steuerung für die Netzwerkvorrichtung basierend auf Empfangen der ersten Steuerungsverfügbarkeitsmeldung vor Empfangen von irgendwelchen anderen Steuerungsverfügbarkeitsmeldungen von irgendeiner der Mehrzahl von Steuerungsvorrichtungen.

9. Verfahren nach Anspruch 7, wobei die Leistungscharakteristik eine Anzahl von Netzwerkvorrichtungen ist, die von jeder Steuerungsvorrichtung gesteuert werden, wobei das Verfahren umfasst:
Empfangen einer ersten Anzahl anderer Netzwerkvorrichtungen, die von der ersten Steuerungsvorrichtung gesteuert werden, und einer zweiten Anzahl anderer Netzwerkvorrichtungen, die von der zweiten Steuerungsvorrichtung gesteuert werden; und
Auswählen der Steuerung mit der niedrigeren Anzahl von Netzwerkvorrichtungen unter seiner Steuerung.

10. Verfahren nach Anspruch 7, wobei die Leistungscharakteristik eine Latenz für jede Steuerungsvorrichtung ist, wobei das Verfahren umfasst:
Messen von jeweiligen Kommunikationslatenzen zwischen der Netzwerkvorrichtung und der ersten und zweiten Steuerung;
Auswählen der Steuerung mit der niedrigsten Latenz;
Bestimmen, durch die Netzwerkvorrichtung, dass die Netzwerkvorrichtung eine Steuerungsvorrichtung benötigt; und/oder
Warten, durch die Netzwerkvorrichtung, eine zufällige Zeitspanne nach dem Bestimmen, bevor die Steuerungsvorrichtung ausgewählt wird.

11. Verfahren nach Anspruch 7, wobei die Netzwerkvorrichtung in einem Netzwerk ist, das eine Mehrzahl von Netzwerkvorrichtungen umfasst, die mindestens eine zweite Netzwerkvorrichtung umfasst, die durch die zweite Steuerungsvorrichtung gesteuert wird.

12. Verfahren nach Anspruch 7, wobei das Verfahren umfasst:
Auswählen, durch die Netzwerkvorrichtung, als Backup-Steuerung für die Netzwerkvorrichtung, der jeweils anderen der ersten Steuerungsvorrichtung und der zweiten Steuerungsvorrichtung, die nicht als Steuerung für die Netzwerkvorrichtung ausgewählt wurde, und/oder
Berichten an die erste Steuerungsvorrichtung und an die zweite Steuerungsvorrichtung der Auswahl der Backup- Steuerung für die Netzwerkvorrichtung.

13. Greifbare, computerlesbare Speichermedien, die nicht-flüchtige, prozessorausführbare Instruktionen speichern, die, wenn sie von einer Rechenvorrichtung ausgeführt werden, die die Speichermedien und einen oder mehrere Prozessoren umfasst, bewirken, dass der eine oder die mehreren Prozessoren die Operationen nach einem der Ansprüche 7 bis 12 ausführen.

## Revendications

1. Un dispositif de réseau (230) configuré pour un réseau défini par logiciel, SDN, le dispositif de réseau (230) comprenant plusieurs ports d'interface réseau (238), une mémoire (236) stockant des données de configuration, et au moins un processeur (244), **caractérisé en ce que** le processeur est configuré pour :
recevoir un message de disponibilité de premier contrôleur en provenance d'un premier dispositif formant contrôleur compris dans une pluralité de dispositifs formant contrôleurs, la pluralité de dispositifs formant contrôleurs comprenant au moins un deuxième dispositif formant contrôleur ;
déterminer, en réponse à la réception du message de disponibilité de premier contrôleur provenant du premier dispositif formant contrôleur, une première valeur pour une caractéristique de performance du premier dispositif formant contrôleur ;
recevoir un message de disponibilité de deuxième contrôleur en provenance du deuxième dispositif formant contrôleur compris dans la pluralité de dispositifs formant contrôleurs ;
déterminer, en réponse à la réception du message de disponibilité de deuxième contrôleur provenant du deuxième dispositif formant contrôleur, une deuxième valeur pour la caractéristique de performance du deuxième dispositif formant contrôleur ;
sélectionner l'un parmi le premier dispositif formant contrôleur et le deuxième dispositif formant contrôleur en tant que contrôleur pour le dispositif de réseau (230) sur la base au moins du message de disponibilité de premier contrôleur reçu du premier dispositif formant contrôleur et d'une comparaison de la première valeur et de la deuxième valeur ; et
signaler, à chaque dispositif faisant partie de la pluralité de dispositifs formant contrôleurs, la sélection du dispositif formant contrôleur pour le dispositif de réseau (230).

2. Le dispositif de réseau (230) selon la revendication 1, dans lequel ledit au moins un processeur (244) est configuré pour :
sélectionner le premier dispositif formant contrôleur comme contrôleur pour le dispositif de réseau (230) sur la base de la réception du message de disponibilité de premier contrôleur avant de recevoir tout autre message de disponibilité de contrôleur provenant de n'importe quel dispositif faisant partie de la pluralité de dispositifs formant contrôleurs.

3. Le dispositif de réseau (230) selon la revendication 1, dans lequel la caractéristique de performance est un nombre de dispositifs de réseau sous le contrôle de chaque dispositif formant contrôleur, et dans lequel ledit au moins un processeur (244) est configuré pour :
recevoir un premier comptage d'autres dispositifs de réseau contrôlés par le premier dispositif formant contrôleur et un deuxième comptage d'autres dispositifs de réseau contrôlés par le deuxième dispositif formant contrôleur ; et sélectionner le contrôleur ayant le plus petit nombre d'autres dispositifs de réseau sous son contrôle.

4. Le dispositif de réseau (230) selon la revendication 1, dans lequel la caractéristique de performance est la latence pour chaque dispositif formant contrôleur, ledit au moins un processeur (244) étant configuré pour :
mesurer les latences de communication respectives entre le dispositif de réseau (230) et les premier et deuxième contrôleurs ; et
sélectionner le contrôleur ayant la latence la plus faible.

5. Le dispositif de réseau (230) selon la revendication 1, dans lequel ledit au moins un processeur (244) est configuré pour attendre une durée aléatoire avant de sélectionner le dispositif formant contrôleur, et/ou
dans lequel le dispositif de réseau (230) est compris dans une pluralité de dispositifs de réseau comprenant au moins un deuxième dispositif de réseau commandé par le deuxième dispositif formant contrôleur.

6. Le dispositif de réseau (230) selon la revendication 1, ledit au moins un processeur (244) étant configuré pour sélectionner l'autre dispositif parmi le premier dispositif formant contrôleur et le deuxième dispositif formant contrôleur en tant que contrôleur de secours pour le dispositif de réseau, et/ou pour signaler au premier dispositif formant contrôleur et au deuxième dispositif formant contrôleur la sélection du contrôleur de secours pour le dispositif de réseau.

7. Un procédé (300) mis en oeuvre pour un réseau défini par logiciel, SDN, le procédé comprenant :
le fait de recevoir, par un dispositif de réseau comprenant plusieurs ports d'interface réseau, une mémoire stockant des données de configuration, et au moins un processeur informatique, un message de disponibilité de premier contrôleur en provenance d'un premier dispositif formant contrôleur compris dans une pluralité de dispositifs formant contrôleurs, la pluralité de dispositifs formant contrôleurs comprenant au moins un deuxième dispositif formant contrôleur ;
le fait de déterminer, par le dispositif de réseau, en réponse à la réception du message de disponibilité de premier contrôleur provenant du premier dispositif formant contrôleur, une première valeur pour une caractéristique de performance du premier dispositif formant contrôleur ;
le fait de déterminer, par le dispositif de réseau, en réponse à la réception d'un message de disponibilité de deuxième contrôleur en provenance du deuxième dispositif formant contrôleur, une deuxième valeur pour la caractéristique de performance du deuxième dispositif formant contrôleur ; et
le fait de sélectionner, par le dispositif de réseau, l'un ou l'autre parmi le premier dispositif formant contrôleur et le deuxième dispositif formant contrôleur en tant que contrôleur pour le dispositif de réseau sur la base au moins du message de disponibilité de premier contrôleur reçu du premier dispositif formant contrôleur et d'une comparaison de la première valeur et de la deuxième valeur ; et
le fait de signaler, par le dispositif de réseau, à chaque dispositif faisant partie de la pluralité de dispositifs formant contrôleurs, la sélection du dispositif formant contrôleur pour le dispositif de réseau.

8. Le procédé selon la revendication 7, le procédé comprenant :
le fait de sélectionner, par le dispositif de réseau, le premier dispositif formant contrôleur en tant que contrôleur pour le dispositif de réseau sur la base de la réception du message de disponibilité de premier contrôleur avant la réception de tout autre message de disponibilité de contrôleur en provenance de l'un quelconque des dispositifs faisant partie de la pluralité des dispositifs formant contrôleurs.

9. Le procédé selon la revendication 7, dans lequel la caractéristique de performance est un nombre de dispositifs de réseau sous le contrôle de chaque dispositif formant contrôleur, le procédé comprenant :
le fait de recevoir un premier comptage d'autres dispositifs de réseau contrôlés par le premier dispositif formant contrôleur et un deuxième comptage d'autres dispositifs de réseau contrôlés par le deuxième dispositif formant contrôleur ; et le fait de sélectionner le contrôleur ayant le plus petit nombre d'autres dispositifs de réseau sous son contrôle.

10. Le procédé selon la revendication 7, dans lequel la caractéristique de performance est la latence pour chaque dispositif formant contrôleur, le procédé comprenant :
le fait de mesurer les latences de communication respectives entre le dispositif de réseau et les premier et deuxième contrôleurs ;
le fait de sélectionner le contrôleur ayant la latence la plus faible ;
le fait de déterminer, par le dispositif de réseau, que le dispositif de réseau a besoin d'un dispositif formant contrôleur ; et/ou
le fait d'attendre, par le dispositif de réseau, une durée aléatoire après la détermination, avant de sélectionner le dispositif formant contrôleur.

11. Le procédé selon la revendication 7, dans lequel le dispositif de réseau fait partie d'un réseau comprenant une pluralité de dispositifs de réseau comprenant au moins un deuxième dispositif de réseau contrôlé par le deuxième dispositif formant contrôleur.

12. Le procédé selon la revendication 7, le procédé comprenant :
le fait de sélectionner, par le dispositif de réseau, en tant que contrôleur de secours pour le dispositif de réseau, l'autre parmi le premier dispositif formant contrôleur et le deuxième dispositif formant contrôleur non sélectionné en tant que contrôleur pour le dispositif de réseau, et/ou
le fait de signaler au premier dispositif formant contrôleur et au deuxième dispositif formant contrôleur la sélection du contrôleur de secours pour le dispositif de réseau.

13. Supports de stockage tangibles lisibles par ordinateur stockant des instructions non transitoires exécutables par un processeur qui, lorsqu'elles sont exécutées par un dispositif informatique comprenant les supports de stockage et un ou plusieurs processeurs, amènent le ou les processeurs à mettre en oeuvre les opérations selon l'une des revendications 7 à 12.
